# FASCICULE DE BREVET EUROPEEN

(11) **EP 2 855 400 B1**
(45) Date de publication et mention de la délivrance du brevet: **01.06.2016**
(21) Numéro de dépôt: 13719517.8
(22) Date de dépôt: 25.04.2013
(51) Int. Cl.: C04B 41/80, C04B 41/89, G04B 37/22

(54) **ELÉMENT CÉRAMIQUE INCRUSTÉ D'AU MOINS UN DÉCOR EN CÉRAMIQUE COMPOSITE**
KERAMIKELEMENT MIT MINDESTENS EINEM VERBUNDKERAMIKDEKOREINSATZ
CERAMIC ELEMENT INLAID WITH AT LEAST ONE COMPOSITE CERAMIC DECORATION

(30) Priorité: 30.05.2012 EP 12170045
(43) Date de publication de la demande: 08.04.2015
(73) Titulaire: The Swatch Group Research and Development Ltd., 2074 Marin (CH)
(72) Inventeur: FERNANDEZ CIURLEO, Maria, CH-2114 Fleurier (CH); MULLER, Juliette, CH-2520 La Neuveville (CH); BOURBAN, Stewes, CH-1589 Chabrey (CH)
(74) Mandataire: Couillard, Yann Luc Raymond
(86) Numéro de dépôt international: PCT/EP2013/058661
(87) Numéro de publication internationale: WO 2013/178412

(56) Documents cités:
- EP-A1- 2 380 864
- WO-A1-2005/028399
- JP-A- 2003 137 677

## Description

### Domaine de l'invention

L'invention se rapporte à un élément céramique incrusté d'au moins un décor en céramique composite et plus précisément un tel élément destiné à être monté notamment dans une pièce d'horlogerie.

### Arrière-plan de l'invention

Il est connu de former des lunettes de montre au moins partiellement en saphir synthétique pour montrer, par transparence, un dépôt effectué dans un creux sous la lunette formant par exemple une graduation ou une dénomination commerciale. Cette configuration à l'avantage de protéger le dépôt de toute dégradation mécanique par recouvrement total de la partie en saphir. Cependant, cette configuration peut rendre difficile la lecture du décor par la transmission altérée de la coloration du dépôt mais également par le manque de différence de la teinte du saphir par rapport à celle du dépôt.

Le document EP 2 380 864 A décrit des pièces d'horlogerie et des articles de bijouterie ou de joaillerie en céramique ayant un motif incrusté métallique.

### Résumé de l'invention

Le but de la présente invention est de pallier tout ou partie les inconvénients cités précédemment en gardant l'avantage de la résistance mécanique en apportant celui d'une qualité visuelle améliorée.

A cet effet, l'invention se rapporte à un procédé de fabrication d'un élément céramique ou cermet incrusté d'une pièce d'horlogerie ou d'un article de joaillerie comportant les étapes suivantes :
a) former un corps en céramique ;
b) graver au moins un évidement dans une face du corps en céramique, chaque au moins un évidement formant l'empreinte d'un décor ;
c) modifier l'état de surface du fond dudit au moins un évidement afin d'augmenter sa surface de contact ;
d) remplir ledit au moins un évidement d'une céramique composite afin de former ledit décor ;
e) aplanir ladite céramique composite afin de n'en laisser que dans le creux dudit au moins un évidement, caractérisé en ce que l'étape d) comporte les phases
   i) remplir ledit au moins un évidement (12) avec une matrice organique chargée avec des particules de céramique, et
   ii) réticuler et densifier sous atmosphère controlée ladite matrice afin de former la céramique composite.

On réalise immédiatement que la variété des teintes du décor et/ou de la céramique n'est plus limitée par la transparence de cette dernière tout en gardant une bonne résistance à l'usure. A titre d'exemple, il est ainsi possible d'obtenir un rendu visuel très contrasté avec le corps en céramique de couleur sombre et des décors en céramique composite d'une ou plusieurs couleur(s) claire(s) tout en ayant un aspect « céramique ».

Conformément à d'autres caractéristiques avantageuses de l'invention :
- l'étape a) est réalisée par frittage ;
- le corps en céramique comporte un carbure, un oxyde ou un nitrure de matériaux comme le titane, le silicium, l'aluminium ou le zirconium ou un cermet ;
- l'étape b) est réalisée par laser ;
- chaque au moins un évidement comporte une profondeur comprise entre 80 µm et 500 µm afin d'améliorer la force d'accrochage ;
- l'étape c) est réalisée par laser, par sablage ou par gravage chimique;
- lorsque l'étape c) est réalisée par laser, elle permet de former des cavités dans ledit fond dudit au moins un évidement ;
- les cavités forment des rainures courant sur ledit fond dudit au moins un évidement ;
- lesdites rainures courant sur ledit fond dudit au moins un évidement sont sécantes ;
- les cavités ont des profondeurs qui sont inférieures au cinquième de la profondeur dudit au moins un évidement ;
- la matrice organique est formée à partir d'un époxyde modifié ou non et/ou d'un acrylique modifié ou non et/ou d'un polyuréthane et/ou d'une silicone ;
- les particules de céramique sont formées à partir d'un carbure, d'un oxyde ou d'un nitrure de matériaux comme le titane, le silicium, l'aluminium ou le zirconium ;
- la phase ii) est réalisée à une température comprise entre 20 et 300°C et/ou à une pression comprise entre 1 et 6 bars ;
- le procédé comporte, avant l'étape d), l'étape f) : former une couche de liaison au niveau du fond dudit au moins un évidement afin d'assurer un meilleur accrochage de la céramique composite ;
- la couche de liaison est formée à partir d'une laque, d'un métal, d'un alliage métallique, d'un nitrure métallique, d'un carbure métallique, d'un silane, un organosiloxane, un alcanéthiol, un alcane disulfide, un zirconate, un titanate et/ou un aluminate ;
- le procédé, entre l'étape d) et l'étape e), comporte les étapes b') : graver au moins un deuxième évidement dans une face de la céramique composite, c') : modifier l'état de surface du fond dudit au moins un deuxième évidement afin d'augmenter sa surface de contact et d') remplir ledit au moins un deuxième évidement d'une deuxième céramique composite formée d'une matrice organique chargée avec des particules de céramique afin de former ledit décor avec deux céramiques composites.

De plus, l'invention se rapporte à une partie de l'habillage d'une pièce d'horlogerie, au mouvement d'une pièce d'horlogerie ou plus généralement à une pièce d'horlogerie caractérisé en ce qu'il comporte au moins un élément incrusté par un décor formé par au moins une céramique composite conforme à l'une des variantes précédentes.

De manière avantageuse, on comprend donc que l'élément céramique peut notamment former indifféremment tout ou partie d'un boîtier, d'un bracelet, d'une lunette, d'un cadran, d'une glace, d'un poussoir, d'une couronne, d'un pont, d'une platine et/ou d'une masse oscillante d'une montre.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation d'une pièce d'horlogerie selon l'invention ;
- les figures 2 à 4 sont des étapes successives du procédé de fabrication selon l'invention ;
- la figure 5 est une vue partielle d'un élément obtenu selon l'invention ;
- la figure 6 est un schéma fonctionnel du procédé selon l'invention.

### Description détaillée des modes de réalisation préférés

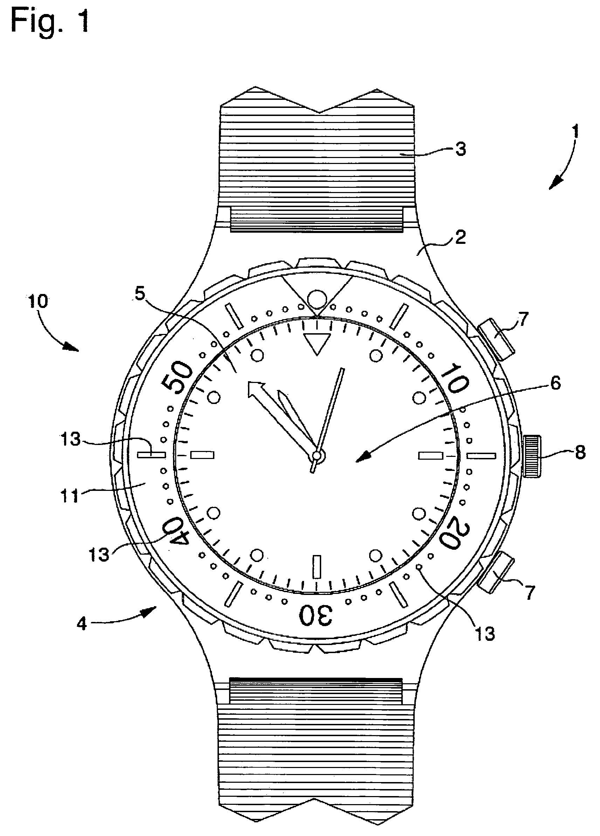

Dans l'exemple illustré à la figure 1, on peut voir une pièce d'horlogerie généralement annotée 1 comportant au moins un élément 10 incrusté. Chaque élément 10 incrusté est destiné à former une pièce résistante à l'usure comportant au moins un décor 13 en céramique composite, comme par exemple une céramique dans une matrice organique, dont la qualité visuelle est améliorée notamment en termes de contraste.

L'élément 10 incrusté selon l'invention peut notamment former indifféremment tout ou partie de l'habillage de la pièce d'horlogerie 1. Ainsi, il pourrait former tout ou partie d'un boîtier 2, d'un bracelet 3, d'une lunette 4, d'un cadran 5, d'une glace 6, d'un poussoir 7 et/ou d'une couronne 8. Dans l'exemple illustré ci-après, l'explication de l'invention sera donnée à partir d'un anneau 10 comportant des décors 13 incrustés formant les graduations d'une lunette 4. Il est également possible de former des éléments 10 incrustés appartenant à un mouvement horloger comme, par exemple, un pont et/ou une platine et/ou une masse oscillante.

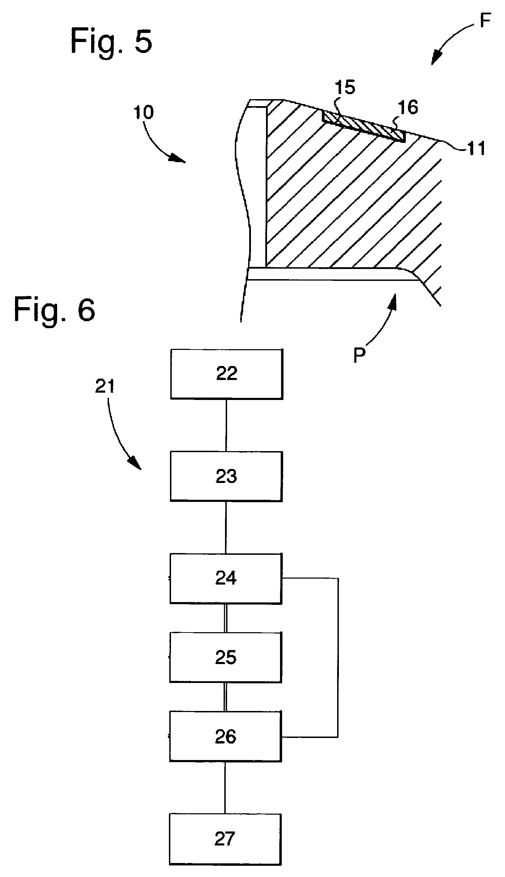

Comme illustré aux figures 1 et 5, l'élément céramique incrusté 10 comporte un corps 11 comportant au moins un évidement 12 formant l'empreinte d'un décor 13. A la figure 1, on peut voir que chaque décor 13 peut, avantageusement selon l'invention, être de forme quelconque, comme, par exemple, une figure géométrique ou un caractère alphanumérique. Selon l'invention, chaque évidement 12 est entièrement rempli par au moins une céramique composite 16. Cette configuration permet de protéger chaque décor 13 dans le corps 11.

Comme mieux expliqué ci-après, selon l'invention, la céramique composite 16 est obtenue à partir d'une matrice organique chargée avec des particules de céramique permettant d'obtenir une grande variété de matériaux de dureté suffisante pour être notamment polis en même temps que le corps 11.

Selon l'invention, le corps 11 est en céramique. Il peut ainsi être formé par un cermet qui est un matériau formé par un mélange de céramique et de métal. Plus généralement, on peut utiliser, à titre d'exemple, un carbure, un oxyde ou un nitrure de matériaux comme le titane, le silicium, l'aluminium ou le zirconium pour former tout ou partie du corps 11.

Afin d'améliorer l'accrochage du décor 13 dans le corps 11, l'évidement 12 comporte une profondeur comprise entre 80 µm et 500 µm et, de manière préférée, sensiblement égale à 400 µm. On comprend donc que, de manière préférée, l'évidement 12 ne débouche pas sur la face opposée P.

De plus, pour des raisons d'adhérence de la céramique composite 16, préférentiellement, chaque fond dudit au moins un évidement 12 comporte un état de surface modifié afin d'augmenter sa surface de contact. Comme expliqué ci-après, l'augmentation de surface peut notamment être obtenue en formant des cavités dans ledit fond dudit au moins un évidement ou en augmentant localement sa rugosité.

Enfin, comme visible à la figure 5, optionnellement, une couche de liaison 15, comprise entre 2 µm et 150 µm, peut être formée entre le fond dudit au moins un évidement et la céramique composite 16 afin d'assurer un meilleur accrochage du décor 13. A titre d'exemple, la couche de liaison 15 peut être formée à partir de technique d'impression afin de recouvrir de manière continue le fond dudit au moins un évidement. Une telle technique peut notamment consister en une tampographie, une pulvérisation, un dépôt par rouleau ou pinceau.

Une telle couche 15 peut notamment comporter une laque et/ou un métal et/ou un alliage métallique et/ou un nitrure métallique et/ou un carbure métallique et/ou un silane et/ou un titanate et/ou un zirconate et/ou un aluminate. De manière non limitative, il a notamment été montré qu'une couche de chrome, de titane ou de nitrure de chrome permettait d'améliorer la liaison entre la céramique du corps 11 et la céramique composite 16

Ainsi, selon l'invention, le rendu visuel de chaque décor 13 est obtenu par là teinte de la céramique composite 16. Par conséquent, le matériau utilisé pour la céramique composite 16 sera préférentiellement guidé par sa teinte ou plus globalement son rendu esthétique. A titre d'exemple, il est ainsi possible d'obtenir un rendu visuel très contrasté avec le corps 11 de couleur sombre et des décors 13 d'une ou plusieurs couleur(s) claire(s) tout en ayant un aspect « céramique ».

Quand la couche optionnelle de liaison 15 est utilisée, sa couleur peut également être sélectionnée ou modifiée afin de modifier l'aspect de la céramique composite 16. En effet, l'épaisseur de céramique composite 16 déposée peut, selon l'application, rendre cette dernière sensiblement translucide. Par conséquent, si une couche optionnelle de liaison 15 est utilisée, sa teinte sera perceptible au travers de la céramique composite 16. Ainsi, à titre d'exemple, un pigment de couleur ou un matériau sélectionné pourrait être ajouté dans la composition de la couche optionnelle de liaison 15 pour modifier l'apparence sensiblement translucide de la céramique composite 16.

On comprend que les décors 13 peuvent être formés avec le même matériau pour offrir un aspect homogène ou avec plusieurs matériaux différents pour, par exemple, donner une teinte différente entre deux décors comme une première teinte pour les index et une autre teinte pour les caractères alphanumériques dans la cas de la figure 1.

Il est également envisageable, afin d'uniformiser les teintes, de former des décors 13 du même matériau que celui qui entoure le corps 11. On pourrait ainsi, dans un exemple de réalisation de la figure 1, avoir des décors 13 de lunette 4 du même matériau que le boîtier 2, le bracelet 3, le reste de la lunette 4, le cadran 5, les poussoirs 7 et/ou la couronne 8.

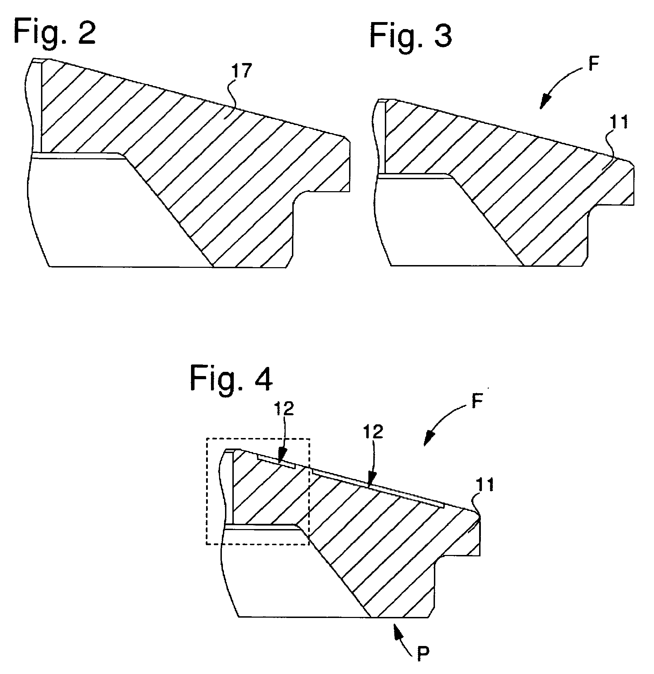

Le procédé de fabrication 21 d'un élément 10 incrusté va maintenant être expliqué à partir des figures 2 à 6 avec l'exemple d'un corps 11 en céramique.

Dans une première étape 22 illustrée à la figure 6, le procédé 21 consiste à former le corps 11 comme, par exemple, en zircone ou en alumine. Comme le montre partiellement le passage de la figure 2 à la figure 3, le corps final 11 de l'étape 22 est obtenu préférentiellement par frittage, c'est-à-dire à partir d'un corps vert 17 préformé par exemple à l'aide d'un processus d'injection et/ou de pressage. A la fin de l'étape 22, le corps 11 visible à la figure 3 comporte ses dimensions finales. Bien entendu, l'étape 22 peut être obtenue autrement que par un frittage.

Comme illustré à la figure 6, le procédé 21 comporte une deuxième étape 23 destinée à graver au moins un évidement 12 borgne dans une face F du corps 11 en céramique, les évidements 12 formant l'empreinte des futurs décors 13 comme visible à la figure 4. Préférentiellement, chaque évidement 12 comporte une profondeur comprise entre 80 µm et 500 µm. L'étape 23 est préférentiellement obtenue par un rayonnement destructif au moyen d'un laser permettant d'obtenir une bonne précision des gravures.

Comme illustré à la figure 6, le procédé 21 se poursuit selon une troisième étape 24 destinée à modifier l'état de surface du fond dudit au moins un évidement 12 afin d'augmenter sa surface de contact. Préférentiellement, l'étape 24 forme des cavités dans le fond dudit au moins un évidement ou se limite à augmenter localement sa rugosité.

Les cavités ou la rugosité peuvent avoir des profondeurs qui ne sont, de manière préférée, pas supérieure au cinquième de la profondeur des évidements 12 afin d'assurer une augmentation de surface de contact. L'étape 24 est préférentiellement obtenue par un rayonnement destructif au moyen d'un laser, par un sablage ou par un gravage chimique.

A titre d'exemple, une expérimentation a été réalisée à partir d'évidements 12 de 400 µm de profondeur. Les cavités ont été réalisées par rayonnement destructif en formant une première série de rainures sensiblement rectilignes et parallèles qui se croise avec une deuxième série de rainures sensiblement rectilignes et parallèles. La profondeur des cavités a été modulée entre 10 et 50 µm en donnant à chaque fois satisfaction quant à l'adhérence du décor 13 par rapport au corps 11. Par conséquent, les cavités peuvent former des rainures courant sur ledit fond dudit au moins un évidement et tout ou partie des rainures peuvent être sécantes.

Bien entendu, on pourrait également imaginer un trou formé grossièrement dans un moule suivi d'une reprise au laser pour obtenir la même précision des gravures. Le but est d'améliorer l'adhérence par augmentation de la surface sans toutefois pénaliser la mouillabilité des matériaux qui doivent remplir les cavités et chaque évidement.

Dans un premier mode de réalisation, visible en traits doubles à la figure 6, l'étape 24 se poursuit avec l'étape 25 du procédé 21 consistant à former une couche de liaison 15 au niveau du fond dudit au moins un évidement afin d'assurer un meilleur accrochage de la future céramique composite 16 formée lors de l'étape 26. Ce premier mode de réalisation concerne le cas où le matériau du décor 13 est formé par la céramique composite 16 et optionnellement la couche de liaison 15 comme visible à la figure 5.

L'étape 25 peut être réalisée par un dépôt sous forme liquide ou pâteux d'un liant devant éventuellement être activé postérieurement à l'aide d'un traitement thermique et/ou d'un séchage. Une telle couche de liaison 15 peut, par exemple, être formée à partir d'un silane ou un organosiloxane vinylé seul ou partiellement hydrolysé ainsi que l'un de ses produits de réaction, d'un silane ou un organosiloxane fonctionnalisé par une fonction époxy seule ou partiellement hydrolysée ainsi que l'un de ses produits de réaction, d'un silane ou un organosiloxane amino fonctionnel seul ou partiellement hydrolysé ainsi que l'un de ses produits de réaction, d'un silane ou un organosiloxane fonctionnalisé par un radical anhydride seul ou partiellement hydrolysé ainsi que l'un de ses produits de réaction et/ou un alcoxyde métallique ou un chélate de métal comme du titane, du zirconium, de l'aluminium comme, par exemple, du titanate de tertiobutyle. On peut donc notamment envisager une laque, un métal, un alliage métallique, un nitrure métallique, un carbure métallique, un silane, un organosiloxane, un alcanéthiol, un alcane disulfide, un zirconate, un titanate et/ou un aluminate.

Dans le premier mode de réalisation, à la suite de cette étape 25, le procédé 21 se poursuit avec l'étape 26.

Dans un deuxième mode de réalisation, visible en trait simple à la figure 6, l'étape 24 se poursuit directement avec l'étape 26. Ce deuxième mode de réalisation concerne le cas où le matériau du décor 13 est uniquement formé par la céramique composite 16.

L'étape 26 consiste à remplir ledit au moins un évidement 12 d'une céramique composite 16 afin de former ledit décor. Préférentiellement, l'étape 26 comporte les phases i) et ii).

Dans une première phase i), le procédé 21 consiste à remplir ledit au moins un évidement 12 avec une matrice organique chargée avec des particules de céramique. Le procédé 21 se poursuit avec la deuxième phase ii) destinée à chauffer sous atmosphère contrôlée ladite matrice afin de la réticuler et de la densifier. On comprend donc qu'on obtient une céramique composite 16 dont la dureté sera suffisante pour être notamment polie en même temps que le corps 11.

De manière préférée, la matrice organique utilisée lors de l'étape 26 est formée par exemple à partir d'un époxyde modifié ou non, d'un acrylique modifié ou non, d'un polyuréthane ou d'une silicone. Ainsi, suivant la nature de la matrice, la réticulation peut être initiée et/ou effectuée et/ou améliorée à l'aide d'un rayonnement électromagnétique comme, par exemple, par un rayonnement dans le domaine des ultraviolets (UV). A titre d'exemple, il est ainsi possible d'utiliser les produits commerciaux E28311, E2840 vendus par la société The Swatch Group Research and Development Ltd., div. Polymers. Par conséquent, au vu de ces matériaux, la phase ii) peut être réalisée à une température comprise entre 20 et 300 °C et une pression comprise entre 1 et 6 bars.

De plus, préférentiellement selon l'invention, les particules de céramique sont formées à partir d'un carbure, d'un oxyde ou d'un nitrure de matériaux comme le titane, le silicium, l'aluminium ou le zirconium pour former tout ou partie du décor 13. On comprend donc que ces particules peuvent être de la même famille que celle du corps 11 ou non. De plus, des particules de diamant peuvent être ajoutées en plus des particules de céramique.

Comme expliqué ci-dessus, suivant la teinte ou plus globalement le rendu visuel souhaité, la ou les céramique(s) composite(s) 16 formée(s) lors de l'étape 26 comporte(nt) de manière préférée une ou plusieurs teintes contrastant avec celle du corps 11.

Enfin, dans une dernière étape 27, le procédé 21 se termine en aplanissant chaque céramique composite 16 afin de n'en laisser que dans le creux de chaque évidement 12. L'élément 10 incrusté est ainsi terminé et n'a, éventuellement, plus qu'à être monté sur une pièce finale. Cette étape 27 peut être obtenue par une méthode de surfaçage habituelle comme un meulage ou un rodage pour enlever le surplus de matière suivi d'un polissage.

Bien entendu, la présente invention ne se limite pas à l'exemple illustré mais est susceptible de diverses variantes et modifications qui apparaîtront à l'homme de l'art. En particulier, l'application de l'élément 10 incrusté selon l'invention ne saurait se limiter à une pièce d'horlogerie 1. Ainsi, l'élément 10 incrusté pourrait, à titre d'exemple, être appliqué à un article de bijouterie ou de joaillerie ou encore aux arts de la table.

De plus, il est envisageable de substituer le gravage par laser de l'étape 23 et/ou le gravage par laser, le sablage ou le gravage chimique de l'étape 24 par un autre type de gravage si sa précision et son taux de rebut est acceptable.

En outre, il est également possible de réaliser des décors comportant plusieurs céramiques composites imbriquées et/ou adjacentes. Un tel mode de réalisation peut par exemple permettre un élément multicolore. Ainsi, une première céramique composite d'une première couleur peut être elle-même gravée, par exemple par laser, pour y former une deuxième céramique composite d'une deuxième couleur. On peut ainsi obtenir dans le décor lui-même deux couleurs en contraste ou une couleur avec un matériau phosphorescent tel que du superluminova®.

## Revendications

1. Procédé de fabrication (21) d'un élément céramique incrusté (10) d'une pièce d'horlogerie (1) ou d'un article de joaillerie comportant les étapes suivantes :
a) former (22) un corps (11) en céramique ;
b) graver (23) au moins un évidement (12) dans une face (F) du corps (11) en céramique, chaque au moins un évidement formant l'empreinte d'un décor (13) ;
c) modifier (24) l'état de surface du fond dudit au moins un évidement afin d'augmenter sa surface de contact ;
d) remplir (26) ledit au moins un évidement d'une céramique composite (16) afin de former ledit décor (13) ;
e) aplanir (27) ladite céramique composite (16) afin de n'en laisser que dans le creux dudit au moins un évidement.
**caractérisé en ce que** l'étape d) comporte les phases suivantes :
i) remplir ledit au moins un évidement (12) avec une matrice organique chargée avec des particules de céramique ;
ii) réticuler et densifier sous atmosphère contrôlée ladite matrice afin de former la céramique composite.

2. Procédé (21) selon la revendication précédente, **caractérisé en ce que** l'étape a) est réalisée par frittage.

3. Procédé (21) selon la revendication 1 ou 2, **caractérisé en ce que** le corps (11) en céramique comporte un carbure, un oxyde ou un nitrure respectivement de titane, de silicium, d'aluminium ou de zirconium.

4. Procédé de fabrication (21) d'un élément cermet incrusté (10) d'une pièce d'horlogerie (1) ou d'un article de joaillerie comportant les étapes suivantes :
a) former (22) un corps (11) en cermet ;
b) graver (23) au moins un évidement (12) dans une face (F) du corps (11) en cermet, chaque au moins un évidement formant l'empreinte d'un décor (13) ;
c) modifier (24) l'état de surface du fond dudit au moins un évidement afin d'augmenter sa surface de contact ;
d) remplir (26) ledit au moins un évidement d'une céramique composite (16) afin de former ledit décor (13) ;
e) aplanir (27) ladite céramique composite (16) afin de n'en laisser que dans le creux dudit au moins un évidement.
**caractérisé en ce que** l'étape d) comporte les phases suivantes :
i) remplir ledit au moins un évidement (12) avec une matrice organique chargée avec des particules de céramique ;
ii) réticuler et densifier sous atmosphère contrôlée ladite matrice afin de former la céramique composite.

5. Procédé (21) selon la revendication précédente, **caractérisé en ce que** le corps (11) en cermet comporte un carbure, un oxyde ou un nitrure respectivement de titane, de silicium, d'aluminium ou de zirconium.

6. Procédé (21) selon l'une des revendications précédentes, **caractérisé en ce que** l'étape b) est réalisée par laser.

7. Procédé (21) selon l'une des revendications précédentes, **caractérisé en ce que** chaque au moins un évidement (12) comporte une profondeur comprise entre 80 µm et 500 µm afin d'améliorer la force d'accrochage.

8. Procédé (21) selon l'une des revendications précédentes, **caractérisé en ce que** l'étape c) est réalisée par laser.

9. Procédé (21) selon l'une des revendications précédentes, **caractérisé en ce que** l'étape c) forme des cavités dans ledit fond dudit au moins un évidement.

10. Procédé (21) selon la revendication précédente, **caractérisé en ce que** les cavités forment des rainures courant sur ledit fond dudit au moins un évidement.

11. Procédé (21) selon la revendication précédente, **caractérisé en ce que** lesdites rainures courant sur ledit fond dudit au moins un évidement sont sécantes.

12. Procédé (21) selon l'une des revendications 9 à 11, **caractérisé en ce que** les cavités ont des profondeurs qui sont inférieures au cinquième de la profondeur dudit au moins un évidement (12).

13. Procédé (21) selon l'une des revendications 1 à 7, **caractérisé en ce que** l'étape c) est réalisée par sablage.

14. Procédé (21) selon l'une des revendications précédentes, **caractérisé en ce que** la matrice organique est formée à partir d'un époxyde modifié ou non et/ou d'un acrylique modifié ou non et/ou d'un polyuréthane et/ou d'une silicone.

15. Procédé (21) selon l'une des revendications précédentes, **caractérisé en ce que** les particules de céramique sont formées à partir d'un carbure, d'un oxyde ou d'un nitrure respectivement de titane, de silicium, d'aluminium ou de zirconium.

16. Procédé (21) selon l'une des revendications précédentes, **caractérisé en ce que** la phase ii) est réalisée à une température comprise entre 20 et 300°C.

17. Procédé (21) selon l'une des revendications précédentes, **caractérisé en ce que** la phase ii) est réalisée à une pression comprise entre 1 et 6 bars.

18. Procédé (21) selon l'une des revendications précédentes, **caractérisé en ce qu'**il comporte, avant l'étape d), l'étape suivante :
f) former (25) une couche de liaison au niveau du fond dudit au moins un évidement afin d'assurer un meilleur accrochage de la céramique composite.

19. Procédé (21) selon la revendication précédente, **caractérisé en ce que** la couche de liaison est formée à partir d'une laque.

20. Procédé (21) selon la revendication 18, **caractérisé en ce que** la couche de liaison est formée à partir d'un métal ou d'un alliage métallique.

21. Procédé (21) selon la revendication 18, **caractérisé en ce que** la couche de liaison est formée à partir d'un nitrure métallique, d'un carbure métallique, d'un silane, un organosiloxane, un alcanéthiol, un alcane disulfide, un zirconate, un titanate et/ou un aluminate.

22. Procédé (21) selon l'une des revendications précédentes, **caractérisé en ce que** le procédé, entre l'étape d) et l'étape e), comporte les étapes suivantes :
b')graver au moins un deuxième évidement dans une face de la céramique composite ;
c') modifier l'état de surface du fond dudit au moins un deuxième évidement afin d'augmenter sa surface de contact ;
d')remplir ledit au moins un deuxième évidement d'une deuxième céramique composite formée d'une matrice organique chargée avec des particules de céramique afin de former ledit décor avec deux céramiques composites.

23. Pièce d'horlogerie (1) **caractérisée en ce qu'**elle comporte au moins un élément céramique ou cermet (10) incrusté par au moins un décor (13) comportant au moins une céramique composite (16) obtenu à partir du procédé conforme à l'une des revendications précédentes, le corps (11) en céramique ou en cermet dudit élément formant une pièce (2, 3, 4, 5, 6, 7, 8) de l'habillage de ladite pièce d'horlogerie.

24. Pièce d'horlogerie (1) **caractérisée en ce qu'**elle comporte au moins un élément céramique ou cermet (10) incrusté par au moins un décor (13) comportant au moins une céramique composite (16) obtenu à partir du procédé conforme à l'une des revendications 1 à 22, le corps (11) en céramique ou en cermet dudit élément formant une pièce du mouvement de ladite pièce d'horlogerie.

25. Article de joaillerie **caractérisé en ce qu'**il comporte au moins un élément céramique ou cermet (10) incrusté par au moins un décor (13) comportant au moins une céramique composite (16) obtenu à partir du procédé conforme à l'une des revendications 1 à 22, le corps (11) en céramique ou en cermet dudit élément formant une pièce dudit article de joaillerie.

## Patentansprüche

1. Verfahren (21) zum Herstellen eines inkrustierten keramischen Elements (10) eines Zeitmessgeräts (1) oder eines Juwelierartikels, das die folgenden Schritte umfasst:
a) Bilden (22) eines Körpers (11) aus Keramik;
b) Gravieren (23) wenigstens einer Aussparung (12) in eine Fläche (F) des Körpers (11) aus Keramik, wobei jede der wenigstens einen Aussparung eine Verzierungsprägung (13) bildet;
c) Modifizieren (24) des Zustands der Oberfläche des Bodens der wenigstens einen Aussparung, um seine Kontaktoberfläche zu vergrößern;
d) Füllen (26) der wenigstens einen Aussparung mit einer Verbundkeramik (16), um die Verzierung (13) zu bilden;
e) Einebnen (27) der Verbundkeramik (16), um sie nur in dem Hohlraum der wenigstens einen Aussparung zurückzulassen;
**dadurch gekennzeichnet, dass** der Schritt d) die folgenden Phasen umfasst:
i) Füllen der wenigstens einen Aussparung (12) mit einem organischen Grundstoff, der mit Keramikpartikeln angereichert ist;
ii) Vernetzen und Verdichten in kontrollierter Atmosphäre des Grundstoffs, um die Verbundkeramik zu bilden.

2. Verfahren (21) nach dem vorhergehenden Anspruch, **dadurch gekennzeichnet, dass** der Schritt a) durch Sintern aufgeführt wird.

3. Verfahren (21) nach Anspruch 1 oder 2, **dadurch gekennzeichnet, dass** der Körper (11) aus Keramik ein Karbid, ein Oxid oder ein Nitrid von Titan, Silizium, Aluminium bzw. Zirkon enthält.

4. Verfahren (21) zum Herstellen eines inkrustierten Cermet-Elements (10) eines Zeitmessgeräts (1) oder eines Juwelierartikels, das die folgenden Schritte umfasst:
a) Bilden (22) eines Körpers (11) aus Cermet;
b) Gravieren (23) wenigstens einer Aussparung (12) in eine Fläche (F) des Körpers (11) aus Cermet, wobei jede der wenigstens einen Aussparung eine Verzierungsprägung (13) bildet;
c) Modifizieren (24) des Zustands der Oberfläche des Bodens der wenigstens einen Aussparung, um seine Kontaktoberfläche zu vergrößern;
d) Füllen (26) der wenigstens einen Aussparung mit einer Verbundkeramik (16), um die Verzierung (13) zu bilden;
e) Einebnen (27) der Verbundkeramik (16), um sie nur in dem Hohlraum der wenigstens einen Aussparung zurückzulassen;
**dadurch gekennzeichnet, dass** der Schritt d) die folgenden Phasen umfasst:
i) Füllen der wenigstens einen Aussparung (12) mit einem organischen Grundstoff, der mit Keramikpartikeln angereichert ist;
ii) Vernetzen und Verdichten in kontrollierter Atmosphäre des Grundstoffs, um die Verbundkeramik zu bilden.

5. Verfahren (21) nach dem vorhergehenden Anspruch, **dadurch gekennzeichnet, dass** der Körper (11) aus Cermet ein Karbid, ein Oxid oder ein Nitrid von Titan, Silizium, Aluminium bzw. Zirkon enthält.

6. Verfahren (21) nach einem der vorhergehenden Ansprüche, **dadurch gekennzeichnet, dass** der Schritt b) durch Laser ausgeführt wird.

7. Verfahren (21) nach einem der vorhergehenden Ansprüche, **dadurch gekennzeichnet, dass** jede der wenigstens einen Aussparung (12) eine Tiefe im Bereich von 80 µm bis 500 µm aufweist, um die Verhakungskraft zu verbessern.

8. Verfahren (21) nach einem der vorhergehenden Ansprüche, **dadurch gekennzeichnet, dass** der Schritt c) durch Laser ausgeführt wird.

9. Verfahren (21) nach einem der vorhergehenden Ansprüche, **dadurch gekennzeichnet, dass** der Schritt c) Hohlräume im Boden der wenigstens einen Aussparung bildet.

10. Verfahren (21) nach dem vorhergehenden Anspruch, **dadurch gekennzeichnet, dass** die Hohlräume Rillen bilden, die im Boden der wenigstens einen Aussparung verlaufen.

11. Verfahren (21) nach dem vorhergehenden Anspruch, **dadurch gekennzeichnet, dass** die Rillen, die im Boden der wenigstens einen Aussparung verlaufen, Sekanten sind.

12. Verfahren (21) nach einem der Ansprüche 9 bis 11, **dadurch gekennzeichnet, dass** die Hohlräume Tiefen besitzen, die geringer sind als ein Fünftel der Tiefe der wenigstens einen Aussparung (12).

13. Verfahren (21) nach einem der Ansprüche 1 bis 7, **dadurch gekennzeichnet, dass** der Schritt c) durch Sandstrahlen ausgeführt wird.

14. Verfahren (21) nach einem der vorhergehenden Ansprüche, **dadurch gekennzeichnet, dass** der organische Grundstoff aus modifiziertem oder nicht modifiziertem Epoxid und/oder modifiziertem oder nicht modifiziertem Acryl und/oder Polyurethan und/oder Silikon gebildet ist.

15. Verfahren (21) nach einem der vorhergehenden Ansprüche, **dadurch gekennzeichnet, dass** die Keramikpartikel aus einem Karbid, einem Oxid oder einem Nitrid von Titan, Silizium, Aluminium bzw. Zirkon gebildet sind.

16. Verfahren (21) nach einem der vorhergehenden Ansprüche, **dadurch gekennzeichnet, dass** die Phase ii) bei einer Temperatur im Bereich von 20 bis 300 °C ausgeführt wird.

17. Verfahren (21) nach einem der vorhergehenden Ansprüche, **dadurch gekennzeichnet, dass** die Phase ii) bei einem Druck im Bereich von 1 bis 6 Bar ausgeführt wird.

18. Verfahren (21) nach einem der vorhergehenden Ansprüche, **dadurch gekennzeichnet, dass** es vor dem Schritt d) den folgenden Schritt umfasst:
f) Bilden (25) einer Verbindungsschicht auf Höhe des Bodens der wenigstens einen Aussparung, um ein besseres Verhaken der Verbundkeramik zu gewährleisten.

19. Verfahren (21) nach dem vorhergehenden Anspruch, **dadurch gekennzeichnet, dass** die Verbindungsschicht aus einem Lack gebildet ist.

20. Verfahren (21) nach Anspruch 18, **dadurch gekennzeichnet, dass** die Verbindungsschicht aus einem Metall oder einer Metalllegierung gebildet ist.

21. Verfahren (21) nach Anspruch 18, **dadurch gekennzeichnet, dass** die Verbindungsschicht aus einem Metallnitrid, einem Metallkarbid, einem Silan, einem Organosiloxan, einem Alkanethiol, einem Alkandisulfid, Zirkon, Titan und/oder einem Aluminat gebildet ist.

22. Verfahren (21) nach einem der vorhergehenden Ansprüche, **dadurch gekennzeichnet, dass** das Verfahren zwischen dem Schritt d) und dem Schritt e) die folgende Schritte umfasst:
b') Gravieren wenigstens einer zweiten Aussparung in die Fläche der Verbundkeramik;
c') Modifizieren des Zustands der Oberfläche des Bodens der wenigstens einen zweiten Aussparung, um seine Kontaktoberfläche zu vergrößern;
d') Füllen der wenigstens einen zweiten Aussparung mit einer zweiten Verbundkeramik, die aus einem organischen Grundstoff gebildet ist, der mit Keramikpartikeln angereichert ist, um die Verzierung mit zwei Verbundkeramiken zu bilden.

23. Zeitmessgerät (1), **dadurch gekennzeichnet, dass** es wenigstens ein Keramik- oder Cermet-Element (10) umfasst, das durch wenigstens eine Verzierung (13) inkrustiert ist, die wenigstens eine Verbundkeramik (16) aufweist, und das durch das Verfahren nach einem der vorhergehenden Ansprüche erhalten wird, wobei der Körper (11) aus Keramik oder aus Cermet des Elements ein Verkleidungsteil (2, 3, 4, 5, 6, 7, 8) des Zeitmessgeräts bildet.

24. Zeitmessgerät (1), **dadurch gekennzeichnet, dass** es wenigstens ein Keramik- oder Cermet-Element (10) umfasst, das durch wenigstens eine Verzierung (13) inkrustiert ist, die wenigstens eine Verbundkeramik (16) aufweist, und das durch das Verfahren nach einem der Ansprüche 1 bis 22 erhalten wird, wobei der Körper (11) aus Keramik oder aus Cermet des Elements ein Teil des Uhrwerks des Zeitmessgeräts bildet.

25. Juwelierartikel, **dadurch gekennzeichnet, dass** er wenigstens ein Keramik- oder Cermet-Element (10) umfasst, das durch wenigstens eine Verzierung (13) inkrustiert ist, die wenigstens eine Verbundkeramik (16) aufweist, und das durch das Verfahren nach einem der Ansprüche 1 bis 22 erhalten wird, wobei der Körper (11) aus Keramik oder aus Cermet des Elements ein Teil des Juwelierartikels bildet.

## Claims

1. Method (21) of manufacturing an inlaid ceramic element (10) for a timepiece (1) or for a piece of jewellery comprising the following steps:
a) forming (22) a ceramic body (11);
b) etching (23) at least one recess (12) in one face (F) of the ceramic body (11), each at least one recess forming the pattern cavity for a decoration (13);
c) changing (24) the surface state of the bottom of said at least one recess in order to increase the contact surface thereof;
d) filling (26) said at least one recess with a composite ceramic (16) so as to form said decoration (13);
e) flattening (27) said composite ceramic (16) so that said composite ceramic remains only in the hollow of said at least one recess;
**characterized in that** step d) includes the following phases:
i)filling said at least one recess (12) with an organic matrix comprising ceramic particles;
ii) crosslinking and densifying said matrix under a controlled atmosphere so as to form the composite ceramic.

2. Method (21) according to the preceding claim, **characterized in that** step a) is achieved by sintering.

3. Method (21) according to claim 1 or 2, **characterized in that** the ceramic body (11) includes a carbide, an oxide or a nitride of materials such as titanium, silicon, aluminium or zirconium.

4. Method (21) of manufacturing an inlaid cermet element (10) for a timepiece (1) or for a piece of jewellery comprising the following steps:
a) forming (22) a cermet body (11);
b) etching (23) at least one recess (12) in one face (F) of the cermet body (11), each at least one recess forming the pattern cavity for a decoration (13);
c) changing (24) the surface state of the bottom of said at least one recess in order to increase the contact surface thereof;
d) filling (26) said at least one recess with a composite ceramic (16) so as to form said decoration (13);
e) flattening (27) said composite ceramic (16) so that said composite ceramic remains only in the hollow of said at least one recess;
**characterized in that** step d) includes the following phases:
i) filling said at least one recess (12) with an organic matrix comprising ceramic particles;
ii) crosslinking and densifying said matrix under a controlled atmosphere so as to form the composite ceramic.

5. Method (21) according to the preceding claim, **characterized in that** the cermet body (11) includes a carbide, an oxide or a nitride respectively of titanium, of silicon, of aluminium or of zirconium,

6. Method (21) according to any of the preceding claims, **characterized in that** step b) is performed by laser.

7. Method (21) according to any of the preceding claims, **characterized in that** each at least one recess (12) has a depth comprised between 80 µm and 500 µm in order to improve the force of adherence.

8. Method (21) according to any of the preceding claims, **characterized in that** step c) is performed by laser.

9. Method (21) according to any of the preceding claims, **characterized in that** step c) forms cavities in said bottom of said at least one recess.

10. Method (21) according to the preceding claim, **characterized in that** the cavities form grooves running on said bottom of said at least one recess.

11. Method (21) according to the preceding claim, **characterized in that** said grooves running on said bottom of said at least one recess are secant.

12. Method (21) according to any of claims 9 to 11, **characterized in that** the cavities have depths which are less than one fifth of the depth of said at least one recess (12).

13. Method (21) according to any of claims 1 to 7, **characterized in that** step c) is performed by sandblasting.

14. Method (21) according to any of the preceding claims, **characterized in that** the organic matrix is formed from a modified or unmodified epoxy resin and/or a modified or unmodified acrylic and/or a polyurethane and/or a silicone.

15. Method (21) according to any of the preceding claims, **characterized in that** the ceramic particles are formed from a carbide, an oxide or a nitride respectively of titanium, of silicon, of aluminium or of zirconium.

16. Method (21) according to any of the preceding claims, **characterized in that** phase ii) is performed at a temperature of between 20 and 300 °C.

17. Method (21) according to any of the preceding claims, **characterized in that** phase ii) is performed at a pressure of between 1 and 6 bars.

18. Method (21) according to any of the preceding claims, **characterized in that** prior to step d), the method includes the following step:
f) forming (25) a bonding layer on the bottom of said at least one recess in order to achieve improved adherence of the composite ceramic.

19. Method (21) according to the preceding claim, **characterized in that** the bonding layer is formed from a lacquer.

20. Method (21) according to claim 18, **characterized in that** the bonding layer is formed from a metal or from a metallic alloy.

21. Method (21) according to claim 18, **characterized in that** the bonding layer is formed from a metallic nitride, a metallic carbide, a silane, an organosiloxane, an alkanethiol, an alkane disulfide, a zirconate, a titanate and/or an aluminate.

22. Method (21) according to any of the preceding claims, **characterized in that**, between step d) and step e), the method includes the following steps:
b')etching at least a second recess in one face of the composite. ceramic;
c') changing the surface state of the bottom of said at least one second recess in order to increase the contact surface thereof;
d') filling said at least one second recess with a second composite ceramic formed of an organic matrix comprising ceramic particles so as to form said decoration with two composite ceramics.

23. Timepiece (1) **characterized in that** the timepiece includes at least one ceramic or cermet element (10) inlaid with at least one decoration (13) including at least one composite ceramic (16) obtained from the method according to any of the preceding claims, the ceramic or cermet body (11) of said element forming a portion (2, 3, 4, 5, 6, 7, 8) of the exterior parts of said timepiece.

24. Timepiece (1) **characterized in that** the timepiece includes at least one ceramic or cermet element (10) inlaid with at least one decoration (13) including at least one composite ceramic (16) obtained from the method according to any of claims 1 to 22, the ceramic or cermet body (11) of said element forming a portion of the movement of said timepiece.

25. Piece of jewellery **characterized in that** the piece of jewellery includes at least one ceramic or cermet element (10) inlaid with at least one decoration (13) including at least one composite ceramic (16) obtained from the method according to any of claims 1 to 22, the ceramic or cermet body (11) of said element forming a part of said piece of jewellery.
